(19) **Europäisches Patentamt / European Patent Office / Office européen des brevets**

(11) **EP 2 103 354 A2**

(12) **EUROPEAN PATENT APPLICATION**

(43) Date of publication:
23.09.2009 Bulletin 2009/39

(51) Int Cl.:
*B03B 5/36* (2006.01) *B03B 5/62* (2006.01)
*B03B 5/66* (2006.01)

(21) Application number: 08017741.3

(22) Date of filing: 09.10.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.03.2008 JP 2008073773

(71) Applicant: Fuji Xerox Co., Ltd.
Tokyo 107-0052 (JP)

(72) Inventor: Kojima, Hiroshi
Minamiashigara-shi
Kanagawa (JP)

(74) Representative: Grünecker, Kinkeldey,
Stockmair & Schwanhäusser
Anwaltssozietät
Leopoldstrasse 4
80802 München (DE)

(54) **Classification method and classification apparatus**

(57)    A classification apparatus (1) includes: a dispersion liquid inlet channel (2) that introduces a dispersion liquid containing particles; a classification channel (3) that classifies the particles; and at least one discharge channel (4) that discharges the classified particles, wherein the classification channel is provided inclinedly to a direction of gravity.

*FIG. 1*

**Description**

**Background**

1. Technical Field

This invention relates to a classification method and a classification apparatus.

2. Related Art

Methods of classifying fine particles are divided into dry methods and the wet methods. Some of the dry methods can achieve high accuracy owing to a large difference in specific gravity between a fluid and fine particles. Although a difference in specific gravity between a liquid and fine particles is small in wet methods, high classification accuracy can be achieved thereby in the case of a fine powder since fine particles can be easily dispersed in the liquid. By a classification apparatus which usually comprises a rotor in a rotary unit and a stator in a stationary unit, classification is carried out due to the balance between centrifugal force and inertial force. In the dry methods, there have been marketed rotational unit-free classification devices in which "Coanda effect" is employed. In recent years, on the other hand, various studies have been on methods of conducting chemical reactions and unit operations in the micro area and examinations have been made on methods and apparatuses for effectively classifying fine particles without causing contamination and so on.

For example, JP-T-11-508182 discloses a microfabricated extraction device for extracting desired particles from a sample stream containing said desired particles comprising: a. a sample stream inlet; b. an extraction stream inlet; c. an extraction channel having an aspect ratio (w/d) less than 50 in fluid communication with said sample stream inlet and said extraction stream inlet for receiving a sample stream from said sample stream inlet in parallel laminar flow with an extraction stream from said extraction stream inlet; d. a by-product stream outlet in fluid communication with said extraction channel for receiving a by-product stream comprising at least a portion of said sample stream from which desired particles have been extracted; and e. a product stream outlet in fluid communication with said extraction channel for receiving a product stream comprising at least a portion of said extraction stream and comprising desired particles extracted from said sample stream. In this device disclosed in JP-T-11-508182, the sample stream and the extraction stream are in parallel laminar flow and undesired larger particles can be removed from the sample stream by using a difference in diffusion velocities into the sample stream. By using this system, larger particles can be removed from a sample in a minute amount (1 pL). The larger particles are blood cells of several to several ten $\mu$m, while desired particles include large molecules (cells and proteins) and small molecules (composed of several atoms).

In the case of classifying micrometer-size particles with the use of diffusion as discussed above, the driving force of the diffusion is spontaneous movements of the particles such as thermal movements. To separate particles in a channel, therefore, the channel length should be determined by taking the diffusion time of the particles into consideration. As a result, it is unavoidable to use a long channel.

JP-A-2006-116520 discloses a classification method for classifying fine particles in a fine particle dispersion liquid using microchannels wherein the fine particle dispersion liquid is sent to a recovering part from an introduction part of the microchannel in a laminar flow and the fine particles are classified by the difference in sedimentation velocity, or floatation velocity among the fine particles. In the apparatus disclosed in JP-A-2006-116520, classification is carried out not by using diffusion but by using gravity.

JP-A-2006-187770 discloses a particle separation mechanism which comprises a flow passage through which a solution containing particles can flow, a deflection unit for generating an electric field or a magnetic field in such a direction across the flow passage in a definite area of the flow passage so as to deflect the particles, and a particle capturing part that is disposed within the flow passage on such a side that the particles are attracted by the deflecting unit, located in the deflection side and thus captured. In the method of JP-A-2006-187770, no diffusion but an electric field is employed and, therefore, a considerably long flow passage is unnecessary. Since the particles to be used therein are charged, the electric field is switched on/off to capture fine particles separated in the flow passage and to avoid clogging in the flow passage.

JP-A-2007-175684 discloses a flow passage structure for concentrating and classifying fine particles which comprises a flow passage A extended in a definite direction, at least one branch point on the side face of the flow passage A, and at least one branch passage connected to the flow passage A at the branch point and having at least one of scales such as length, width, depth or diameter properly adjusted; wherein, when a fluid is continuously introduced from one end of the flow passage A, the fluid is introduced in such a manner as to separate the fluid into a fluid part containing the particles and another fluid part containing no particle so that at the branch point, particles of a definite size or larger can be prevented from entering the branch passage while particles of a definite size or smaller can be prevented from entering the downstream of the passage A, thereby the fluid containing all particles of the definite size or larger having been introduced or the fluid free from the particles of the definite size or larger can be recovered from the branch passage or the fluid containing particles of the definite size or larger at an elevated concentration can be recovered from the downstream of the passage flow A, and a method therefor. The apparatus disclosed by JP-A-2007-175684 aims at applying the fluid force to particles larger than micrometer-size particles to which a fluid force would not be applied because of causing clogging in a channel.

**Summary**

In the case of classifying micrometer-size particles with the use of a force other than diffusion, the particles can be forcibly transported and, therefore, a long channel is not necessarily required. In this case, however, a procedure for once releasing or controlling an external force other than the diffusion is required to prevent the channel from clogging. (As discussed above, the technique disclosed in JP-A-2007-175684 is hardly applicable to the classification of micrometer-size particles.)

An object of the present invention is to provide a classification apparatus whereby clogging can be prevented even in the case of carrying out the classification with the use of an external force other than diffusion.

According to the invention, the above-described problems have been solved by the following measures (1) and (9). Next, these measures and preferable embodiments thereof (2) to (8) and (10) to (16) will be presented.

(1) A classification apparatus, comprising:

a dispersion liquid inlet channel that introduces a dispersion liquid containing particles;
a classification channel that classifies the particles; and
at least one discharge channel that discharges the classified particles,
wherein the classification channel is provided inclinedly to a direction of gravity.

(2) The classification apparatus as described in (1) above,
wherein the at least one discharge channel includes a discharge channel provided in an upper part of the classification channel.
(3) The classification apparatus as described in (1) or (2) above,
wherein the at least one discharge channel includes a discharge channel provided in a lower part of the classification channel.
(4) The classification apparatus as described in any one of (1) to (3) above,
wherein an inclined angle of the classification channel is larger than 0° but not larger than 75°.
(5) The classification apparatus as described in any one of (1) to (4) above,
wherein the classification channel is provided in such a manner that a cross-section area of the classification channel increases along a traveling direction of the dispersion liquid.
(6) The classification apparatus as described in any one of (1) to (5) above,
wherein the classification channel has a cone shape.
(7) The classification apparatus as described in any one of (1) to (6) above, further comprising:

a transportation liquid inlet channel that introduces a transportation liquid which transports the dispersion liquid.

(8) The classification apparatus as described in any one of (1) to (7) above, further comprising:

a unit that applies an electric field or a magnetic field to the classification channel.

(9) A classification method, comprising:

introducing a dispersion liquid containing particles into a dispersion liquid inlet channel;
classifying the dispersion liquid by passing through a classification channel that is provided inclinedly to a direction of gravity; and
discharging the classified particles from at least one discharge channel.

(10) The classification method as described in (9) above, further comprising:

introducing a transportation liquid into a transportation liquid inlet channel, the transportation liquid transporting the dispersion liquid,
wherein the transportation liquid is transported in the opposite direction to the direction of gravity.

(11) The classification method as described in (9) or (10) above,
wherein the at least one discharge channel includes a discharge channel provided in an upper part of the classification channel.
(12) The classification method as described in any one of (9) to (11) above,
wherein the at least one discharge channel includes a discharge channel provided in a lower part of the classification channel.
(13) The classification method as described in any one of (9) to (12) above,
wherein an inclined angle of the classification channel is larger than 0° but not larger than 75°.
(14) The classification method as described in any one of (9) to (13) above,
wherein the classification channel is provided in such a manner that a cross-section area of the classification channel increases along a traveling direction of the dispersion liquid.
(15) The classification method as described in any one of (9) to (14) above,
wherein the classification channel has a cone shape.
(16) The classification method as described in any one of (9) to (15) above, further comprising:

applying an electric field or a magnetic field to the classification channel.

According to the invention that is described in (1) above, clogging can be prevented compared with a case of not using the constitution of the invention, even in the case of carrying out the classification with the use of an external force other than diffusion.

According to the invention that is described in (2) above, clogging can be more surely prevented compared with a case of not using the constitution of the invention, even in the case of carrying out the classification with the use of an external force other than diffusion.

According to the invention that is described in (3) above, clogging can be more surely prevented compared with a case of not using the constitution of the invention, even in the case of carrying out the classification with the use of an external force other than diffusion.

According to the invention that is described in (4) above, clogging can be more surely prevented compared with a case of not using the constitution of the invention, even in the case of carrying out the classification with the use of an external force other than diffusion.

According to the invention that is described in (5) above, a liquid can be sent in an increased amount compared with a case of not using the constitution of the invention.

According to the invention that is described in (6) above, a liquid can be surely sent in an increased amount compared with a case of not using the constitution of the invention.

According to the invention that is described in (7) above, the classification ability can be improved compared with a case of not using the constitution of the invention.

According to the invention that is described in (8) above, the classification ability can be more surely improved compared with a case of not using the constitution of the invention.

According to the invention that is described in (9) above, clogging can be prevented compared with a case of not using the constitution of the invention, even in the case of carrying out the classification with the use of an external force other than diffusion.

According to the invention that is described in (10) above, the classification ability can be improved compared with a case of not using the constitution of the invention.

According to the invention that is described in (11) above, clogging can be more surely prevented compared with a case of not using the constitution of the invention.

According to the invention that is described in (12) above, clogging can be more surely prevented compared with a case of not using the constitution of the invention.

According to the invention that is described in (13) above, clogging can be more surely prevented compared with a case of not using the constitution of the invention.

According to the invention that is described in (14) above, a liquid can be sent in an increased amount compared with a case of not using the constitution of the invention.

According to the invention that is described in (15) above, a liquid can be surely sent in an increased amount compared with a case of not using the constitution of the invention.

According to the invention that is described in (16) above, the classification ability can be more surely improved compared with a case of not using the constitution of the invention.

**Brief Description of the Drawings**

Exemplary embodiments of the present invention will be described in detail based on the following figures, wherein:

Fig. 1 is a schematic sectional view which shows the first exemplary embodiment of a classification apparatus that is appropriately usable in the present embodiment;

Fig. 2 is a schematic sectional view which shows the second exemplary embodiment of a classification apparatus that is appropriately usable in the present embodiment;

Figs. 3A to 3D are model views which show a case where large and small particles are sent to the classification apparatus of the second exemplary embodiment;

Figs. 4A and 4B are perspective model views which show a third exemplary embodiment of a classification apparatus that is appropriately usable in the present embodiment;

Figs. 5A to 5F are a flow chart which shows an exemplary example of the method of producing a classification apparatus that is appropriately usable in the third exemplary embodiment; and

Fig. 6 shows particle size distributions of the dispersion liquid A and the dispersion liquids ($B_1$ and $B_3$) discharged from the discharge channels 4a and 4c.

## Detailed Description

The classification apparatus in the preset embodiment comprises: a dispersion liquid inlet channel for introducing a dispersion liquid containing particles; a classification channel for classifying the particles; and a discharge channel for discharging the particles having been classified; wherein the classification channel is provided inclinedly to the direction of gravity.

The classification method in the present embodiment comprises: a dispersion liquid inlet step of introducing a dispersion liquid containing particles into a dispersion liquid inlet channel; a classification step of classifying the dispersion liquid by passing through a classification channel that is provided inclinedly to the direction of gravity; and a discharge step of discharging the particles having been classified from a discharge channel.

In the embodiment, the dispersion medium of the dispersion liquid containing particles will be simply called "dispersion medium" too.

<Classification channel>

In the classification apparatus of the embodiment, the classification channel is provided inclinedly to the direction of gravity. The classification method of the embodiment involves the classification step of classifying the dispersion liquid by passing through the classification channel that is provided inclinedly to the direction of gravity.

In the case where the particles have a larger specific gravity than the dispersion medium of the dispersion liquid containing particles, the particles sediment at a velocity proportional to the square of the particle diameter. Particles having larger particle diameter sediment quickly and collide with the inclined face (bottom face) of the classification channel. In the case of a laminar flow, the flow velocity around the wall face is almost zero. Thus, the particles having collided with the bottom face drop along the inclined face due to gravity followed by discharge from a discharge channel provided in the lower part of the classification channel. On the other hand, particles having smaller particle diameter are discharged as such from a discharge channel provided in the upper part of the classification channel without colliding with the inclined face. In this embodiment, one or more discharge channels may be provided. The discharge channel in the lower part of the classification channel can be substituted by a particle reservoir.

The inclined angle of the classification channel in the embodiment can be appropriately determined so long as being larger than 0°. From the viewpoint that particles drop along the inclined face, an angle of 15° or larger is preferred. From the viewpoint of ensuring a sufficient classification efficiency, an angle not larger than 75° is preferred.

The inclined angle of the classification channel is more preferably 20° or larger but not larger than 70° and still preferably 30° or larger but not larger than 60°.

The incline of the classification channel means the incline of the classification channel bottom face to the direction of gravity. For example, a horizontal channel has an inclined angle of 0°C. In this embodiment, the inclined angle of the top face of the classification channel is not specifically restricted.

In this embodiment, it is preferable that the classification channel is a microchannel. When the classification channel is a microchannel, the sedimentation distance is short so that the sedimentation time toward the inclined wall is drastically shortened, which contributes to an increase in the efficiency. In this case, furthermore, the laminar flow can be maintained even at a high flow velocity, which makes it possible to prevent a lowering in the classification ability caused by a turbulent flow. Also, a microchannel is preferable from the viewpoint that the flow velocity of the particles is almost zero around the wall of the classification channel in the case of the laminar flow, which contributes to the improvement in the classification efficiency.

As the microchannel, use may be preferably made of a channel having a width of several to several thousand

μm. The classification apparatus in this embodiment may be a reactor having a plurality of microscale classification channels.

Because of being in the microscale, a microchannel has a small size (representative length) and a small flow velocity and the Reynolds number thereof is 2,300 or less. Therefore, the apparatus having such a microscale channel is not turbulent flow dominant just as a regular apparatus but laminar layer dominant.

The Reynolds number (Re) is determined as follows. When it is 2,300 or less, the apparatus is laminar layer dominant.

The Reynolds number (Re) is proportional to flow velocity (u(m/s)) and representative length (L(m)).

$$R_e = \frac{uL}{\nu} \qquad (1)$$

In this formula, $\nu$ stands for the coefficient of kinetic viscosity ($m^2$/s) of a fluid.

In the case of a channel having a rectangular cross-section, the representative length (L(m)) is defined by the following formula.

$$L = \frac{4S}{l_p} \qquad (2)$$

In this formula, S stans for the cross-section area ($m^2$), and $l_p$ stands for the peripheral length (m).

Referring the width in the cross-section of the rectangular channel as to x (m) and the height thereof as to t (m), the following formula (3) is established.

$$S = tx \qquad l_p = 2(x+t) \qquad (3)$$

Referring the flow amount of a fluid as to a ($m^3$/s), the following formula (4) is established.

$$u = \frac{a}{S} \qquad (4)$$

By assigning the formulae (2), (3) and (4) to the formula (1), the following formula (5) is derived.

$$R_e = \frac{2a}{\nu} \bullet \frac{1}{x+t} \qquad (5)$$

Next, it will be supposed that purified water is sent into the rectangular channel at a constant flow velocity (for example, 10 ml/h). The coefficient of kinetic viscosity of purified water at 25°C is $0.893 \times 10^{-7}$ $m^2$/s.

Provided that the channel height t is constant while the channel width x is variable, the Reynolds number is in inverse proportion to the channel width.

Thus, a channle having a Reynolds number of 2, 300 or less can be designed. So long as the height t is sufficiently small, a laminar flow can be maintained though the channel width x increases.

Next, the classification principle in the classification apparatus of the present embodiment will be illustrated.

<Classification principle>

To recover particles having a desierd particle diameter or less from a dispersion liquid in the case where a dispersion liquid is sent into a classification channel upward, i.e., in the direction opposite to the direction of gravity, particles having a terminal velocity lower than the upward flow velocity move with the upward flow and thus sent to the upper part of the classification channel. On the other hand, particles having a terminal velocity higher than the upward flow velocity sediment in the direction of gravity. By providing a discharge channel in the upper part of the classification channel, the particles having the desierd particle diameter or less can be recovered. By providing a discharge channel in the lower part of the classification channel, the particles having the desierd particle diameter or more can be recovered. By inclining the classification channel to the direction of gravity, the upward flow velocity can be lowered, which enables efficient classification.

The classification apparatus and classification method according to an aspect of the invention are an apparatus and a method for classfying fine particles whereby particles in a dispersion liquid are classified with the use of a classification channel (preferably a microchannel) by taking advantage of diffrence in sedimentation velocity between the particles. The classification apparatus includes a dispersion liquid inlet channel, a classification channel and a discharge channel optionally together with a transportation liquid inlet channel. In this embodiment, it is preferable that the liquids are sent as laminar flows in all channels.

In the present embodiment, the particles coming into contact with the inclined face due to the sedimentation sediment along the bottom face of the classification channel (i.e., the inclined wall face), because the bottom face of the classification channel is inclined. Since the flow velocity at the wall face is almost zero in the laminar flow as described above, the particles coming into contact with the bottom face of the classification channel are scarcely affected by the upward flow. Owing to the difference in specific gravity from the dispersion medium, these particles are sedimented by gravity. As a result, the classification can be completed by using a channel having a shorter length compared with the existing sedimentation-type classification apparatuss and the particles can be classified within a shorter time.

In the case where the specific gravity of particles exceeds the specific gravity of the dispersion medium, the particles sediment and the sedimentation velocity varies depending on the specific gravity or particle diameter of the particles. The particles are classified by taking advantage of this difference in sedimentation velocity. Since the sedimentation velocity is in proportion to the square of the particle diameter, particles having a larger particle diameter sediment at the higher velocity when there are particles differing in particle diameter.

In this embodiment, it becomes possible to broaden the range of particles to which the classification method is applicable by loading an external force being in proportion to particle diameter in addition to the difference in sedimentation velocity. As such an external force, an electric field or a magnetic field may be cited.

<Substitute fluid>

When particles sediment, the fluid flows into the positions at which the particles once exist, which results in the generation of a micro-scale upward flow. This phenomenon, which is called Boycott effect, causes agitation of the particles even in the laminar flow, thereby lowering the classification efficiency.

In the classification apparatus according to an aspect of the present embodiment, in contrast thereto, particles are separated in the upward flow and, therefore, not affected by Boycott effect. Therefore, the separation can be highly effectively carried out.

<Particles>

Although the particles to be classified in this embodiment are not specifically restricted in size, it is preferable that the diameter (the diameter or the maximum diameter) of the particles is 0.1 $\mu$m or more but not more than 1,000 $\mu$m. The classification apparatus and classification method of the embodiment are suitable for classifying particles of 1 $\mu$m or more but not more than 100 $\mu$m in particle diameter, and more suitable for particles of 5 $\mu$m or more but not more than 20 $\mu$m in particle diameter.

It is preferable that the particle diameter is 1,000 $\mu$m or less, since the channel can be prevented from clogging in this case. On the other hand, it is preferable that the particle diameter is 0.1 $\mu$m or more, since such particles would hardly stick to the wall face.

The kind of the particles to be classified is not specifically restricted. Namely, they may be resin fine particles, inorganic fine particles, metal fine particles, ceramic fine particles, cells (for example, lymphocytes, leucocytes, erythrocytes, and so on), etc. without restriction. It is also possible to use a biological sample (whole blood) having been appropriately diluted if needed may be used as the dispersion medium.

Moreover, it is possible to classify high molecular-weight fine particles, crystals or aggregates of an organic matter such as a pigment, crystals or aggregates of an inorganic matter, a metal oxide, a metal nitride, fine particles of a metal compound such as a metal nitride, toner particles,- and so on.

The particles may have arbitrary shapes such as spheres, spheroids, irregular shapes, needles, etc. without specific restriction. Among them, spherical and/or spheroidal particles are preferred. The ratio of the major axis length to the minor axis length (major axis length/minor axis length) is preferably 1 or more but not more than 50 and still preferably 1 or more but not more than 20.

Specific examples of the high molecular-weight fine particles include fine particles of a polyvinyl butyral resin, a polyvinyl acetal resin, a polyallylate resin, a polycarbonate resin, a polyester resin, a phenoxy resin, a polyvinyl chloride resin, a polyvinyl acetate resin, a polystyrene resin, an acrylic resin, a methacrylic resin, a styrene-acryl resin, a styrene-methacryl resin, a polyacrylamide resin, a polyamide resin, a polyvinylpyridine resin, a cellulose-based resin, a polyurethane resin, an epoxy resin, a silicone resin, a polyvinyl alcohol resin, casein, a vinyl chloride-vinyl acetate copolymer, a denatured vinyl chloride-vinyl acetate copolymer, a vinyl chloride-vinyl acetate-maleic anhydride copolymer, a styrene-butadiene copolymer, a vinylidene chloride-acrylonitrile copolymer, a styrene-alkyd resin, a phenol-formaldehyde resin and so on.

Examples of the metals or the fine particles of a metal compound include carbon black, a metal such as zinc, aluminum, copper, iron, nickel, chromium or titanium or an alloy of the same, a metal oxide such as $TiO_2$, $SnO_2$, $Sb_2O_3$, $In_2O_3$, ZnO, MgO or iron oxide or a compound containing the same, a metal nitride such as silicon nitride or fine particles containing a combination of the same.

Although these fine particles are produced by various methods, it has been a common practice to produce fine particles via synthesis in a liquid medium (dispersion medium) followed by the classification of the fine particles as such. In some cases, a product in the form of a mass is mechanically pulverized and the fine particles thus obtained are dispersed in a liquid medium followed by classification. In such a case, the pulverization is frequently carried out in a liquid medium (dispersion medium) and the obtained particles are classified as such.

In the case of classifying a powder (fine particles) produced by the dry method, on the other hand, the fine particles should be preliminarily dispersed in a liquid medium. The methods of dispersing a dry pulverized powder in a liquid medium include a method using a sand mill, a colloid mill, an atoraita, a ball mill, a daino mill, a high-pressure homogenizer, a supersonic disperser, a coball mill, a roll mill or the like. It is preferable that this method be carried out under such conditions that the primary particles are not pulverized by the dispersiing treatment.

<Dispersion medium and transportation liquid>

As the dispersion medium of the dispersion liquid containing the particles and the transportation liquid, any solvent may be used without specific restriction. However, use is made of a solvent having a specific gravity that is smaller than the specific gravity of at least one kind of particles in the dispersion liquid. It is also preferred to use a solvent having a specific gravity that is smaller than the specific gravities of all particles in the dispersion liquid. The transportation liquid means a particle-free solvent that is to be sent to the classification channel.

Also, it is preferable that the difference obtained by subtracting the specific gravity of the dispersion medium or transportation liquid from the specific gravity of the particles is each 0.01 or more. Although a larger difference in specific gravity is preferred since the higher sedimentation velocity of the particles can be thus obtained, it is preferred that this diffrence is not more than 20. It is more preferable that the difference in specific gravity is from 0.05 to 11 and still preferably from 0.05 to 4. It is preferable that the difference obtained by subtracting the specific gravity of the dispersion medium or transportation liquid from the specific gravity of the particles is each 0.01 or more, since the particles can be thus sedimentede. On the other hand, it is also preferable that this difference is not more than 20, since an appropriate sedimentation velocity can be thus achieved and clogging hardly occurs.

The dispersion medium and the transportation liquid may be either the same or different.

As the dispersion medium or the transportation liquid, use may be preferably made of one showing a difference in specific gravity of 0.01 to 20 from the specific gravity of the particles, as described above. Examples thereof include water, an aqueous medium, an organic solvent-based medium and so on.

Examples of the water include ion exchange water, distilled water, electrolytic ionic water and the like. Specific examples of the organic solvent-based solvent includes methanol, ethanol, n-propanol, n-butanol, benzyl alcohol, methyl cellosolve, ethyl cellosolve, acetone, methyl ethyl ketone, cyclohexanon, methyl acetate, n-butyl acetate, dioxane, tetrahydrofuran, methylene chloride, chloroform, chlorobenzene, toluen, xylene etc. and a mixture of two or more kinds of the same.

In the present embodiment, a preferable liquid medium and a preferable transportation liquid differ depending upon the kind of the particles to be classified. The liquid media and transportation liquids that are preferable for respective kinds of the particles are as follows. Examples of the liquid medium to be combined with the high molecular-weight particle (generally, having specific gravity of about 1.05 to about 1. 6) include aqueous solvents, alcohols, organic solvents such as xylene, acid or alkali water etc in which the particles are insoluble.

Examples of the liquid medium to be combined with the metal or metal compound particle (generally, having specific gravity of about 2 to about 10) include water, alcohols, organic solvents such as xylene and oils which cause no damage on a metal due to oxidation or reduction.

Next, the present embodiment will be illustrated by referring to the drawings.

In the following description, the same symbol represents the same subject.


(First exemplary embodiment)


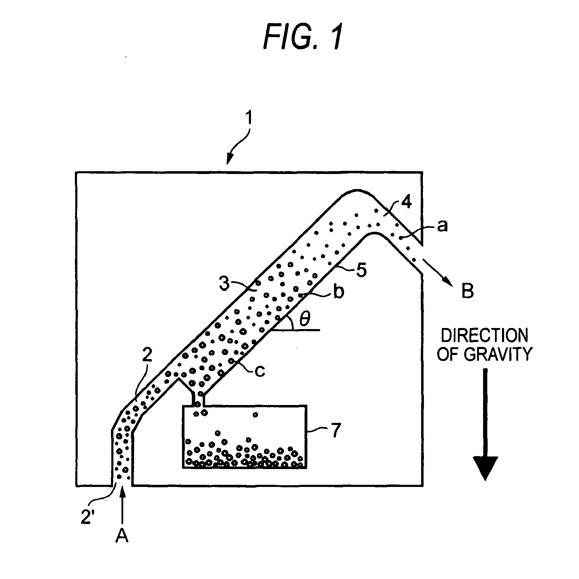

Next, the first exemplary embodiment of the present embodiment will be illustrated by referring to Fig. 1.

Fig. 1 is a schematic sectional view showing the first exemplary embodiment of a classification apparatus that is appropriately usable in the present embodiment.

A classification apparatus 1 includes a dispersion liquid inlet channel 2 for introducing a solution containing particles (dispersion liquid) A, a classification channel 3 that is continuing the dispersion liquid inlet channel 2 and inclined at an angle θ to the direction of gravity (45° in Fig. 1), and a discharge channel 4 for discharging the classified particles which is continuing the classification channel 3.

In Fig. 1, a plate-like microchannel having a depth of 500 $\mu$m is formed in the depth direction perpendicular to the page. The arrow in Fig. 1 indicates the direction of gravity.

In the classification apparatus 1 shown in Fig. 1, the dispersion liquid A is fed from the dispersion liquid inlet 2' that is formed in the lower part of the classification apparatus 1 and sent in the direction opposite to the direction of gravity (vertical direction) via the dispersion liquid inlet channel 2. The method of introducing the dispersion liquid A is not specifically restricted and an appropriate method can be selected from among publicly known ones. It is preferable to inject the dispersion liquid A with a microsyringe, a rotary pump, a screq pump, a centrifugal pump, a piezo pump, etc.

In Fig. 1, the dispersion liquid A is sent to the direction opposite to the vertical direction. However, the invention is not restricted thereto so long as the dispersion liquid inlet channel 2 is provided in the lower part of the classification apparatus 1. That is, the dispersion liquid inlet channel 2 may be provided horizontally to the lower part of the classification channel 3 or the dispersion liquid inlet channel 2 may extend from the classification channel 3 in an inclined state. It is particularly preferable to send the liquid in the direction of gravity, since sedimentation of the particles can be thus prevented. Namely, the constitution is not specifically restricted so long as the dispersion liquid A is sent from the lower part of the classification channel 3.

Next, the classification apparatus 1 of the first exemplary embodiment will be illustrated by presenting as an example a case where the dispersion liquid A contains particles having three kinds (small, medium and large) of diameters (particles a (small), particles b (medium) and particles c (large)).

Concerning the small particles a among the particles contained in the dispersion liquid A in the classification apparatus as shown in Fig. 1, the rising velocity of the dispersion liquid A is higher than the terminal velocity of the small particles a. Thus, the small particles a are discharged as a discharged liquid B from the discharge channel 4 provided in the upper part of the classification channel 3.

Terminal velocity means the kinetic velocity of a single particle that moves in a static flow under an external force in the state where the external force applied to the particle equals the resistance from the fluid. In Fig. 1, the external force applied to the particles is gravity. When the dispersion liquid is sent at a flow velocity higher than the terminal velocity, the particles rise. When the dispersion liquid is sent at a flow velocity lower than the terminal velocity, on the contrary, the particles drop.

On the other hand, the large particles c sediment due to gravity and come into contact with the bottom face 5 of the classification channel 3, since the terminal velocity thereof is higher than the flow velocity of the dispersion liquid A. The flow velocity at the wall face is almost zero in a microchannel. When the large particles c sediment and thus come into contact with the bottom face 5 of the classification channel 3, they sediment along the wall face at a higher flow velocity than in the case of sedimenting in the fluid. In the microchannel apparatus of Fig. 1, therefore,classification can be quickly carried out compared with the case where no inclined classification channel is formed.

In Fig. 1, the large particles 3 having sedimented along the bottom face 5 of the classification channel 3 are recovered into a particle reservoir 7. To maintain the sending pressure of the dispersion liquid at a high level, it is preferable to minimize channels opened outward such as the discharge channel. In the case of treating a definite amount of the dispersion liquid, therefore, use can be preferably made of the system wherein the large particles c are recovered into the particle reservoir 7 to prevent a lowering in the sending pressure of the dispersion liquid.

However, the present embodiment is not restricted to the above case. That is, a second discharge channel may be provided as a substitue for the particle reservoir. In the case of continuously treating the dispersion liquid , it is preferable that a second discharge channel is provided as a substitue for the particle reservoir.

Concerning the particles b having a particle diameter intermediate between the small particles a and the large particles c in Fig. 1, the flow velocity of the dispersion liquid is set a slightly lower than the terminal velocity of the particles b. The particles b gradually sediment and come into contact with the bottom face 5 in the downstream (upper) side of the classification channel 3. Then, the particles b sediment along the bottom face of the classification channel 3 and recovered into the particle reservoir 7.

Although the flow velocity of the dispersion liquid is set lower than the terminal velocity of the particles b in Fig. 1, the present embodiment is not restricted thereto. Namely, it is also possible that the flow velocity of the dispersion liquid is set higher (faster) than the terminal velocity of the particles b so that the particles b are discharged from the discharge channel 4 and recovered into the discharged liquid B.

In Fig. 1, the particles are classified into two portions, i.e., the particles discharged from the discharge channel 4 and those collected into the particle reservoir 7. It is also possible to classify the particles in three or more portions by providing additional discharge channel(s) in the course of the classification channel 3.

Next, a method of producing the classification apparatus according to the present embodiment will be illustrated.

The classification apparatus of the embodiment can be formed on a solid substrate by using a microfabricating technique.

Examples of the material usable in the solid substrate include metals, silicon, Teflon™, glass, ceramics, plastics, and so on. Among them, metals, silicon, Teflon™, glass and ceramics are preferred from the viewpoints of heat resistance, pressure resistance, solvent resistance, and light transmission, and glass is particularly preferred.

The microfabrication techniques for forming the channels are described in, for exmaple, Maikuroriakuta-Shin'Jidai no Gosei Gijyutu (Microreactor-A Synthetic Technique in the New Age), 2003, published by CMC, supervised by Junichi YOSHIDA; Bisai Kako Gijutsu: Oyo-hen: Fotonikusu Erekutoronikus e no Oyo (Microprocessing Techniques: Application: Application to Photonics Electronis Mechatronics), 2003, published by NTS, edited by Event Committee, The Society of Polymer Science, Japan; and so on.

Typical examples of these methods include the LIGA technique using X-ray lithography, the high-aspect-ratio photolithography using EPON SU-8, the microelectric discharge machining ($\mu$-EDM), the high aspect ratio machining of silicon by Deep RIE, the hot emboss machining, the stereo lithography, the laser machining, the ion beam machining, the mechanical microcutting using a microtool made of a hard material such as diamond, and so on. These techniques may be used either alone or in combination. The preferred microfabrication techniques are the LIGA technique using X-ray lithography, the high-aspect-ratio photolithography using EPSON SU-8, the microelectric discharge machining ($\mu$-EDM), and the mechanical microcutting.

The channels used in the present embodiment can also be formed by using a pattern formed by using a photoresist on a silicon wafer as a mold and pouring a resin thereinto followed by hardening (the molding method). In the molding method, use can be made of a silicon resin typified by dimethylpolysiloxane (PDMS) or its derivatives.

In fabricating the classification apparatus according to the present embodiment, a joining technique can be used. Usual joining techniques are roughly classified into the solid-phase joining and the liquid-phase joining. Typical examples of the joining methods commonly used include the solid-phase joining such as the pressure joining and the diffusion joining and the liquid-phase joining such as the welding, the eutectic bonding, the soldering, the adhesion, etc.

In the joining, it is desirable to employ a highly accurate joining method by which the dimension accuracy can be kept without the destruction of the microstructure of the channel, etc., caused by deterioration or large deformation of a material due to high-temperature heating. Examples of such a technique include the silicon direct joining, the anodic joining, the surface activation joining,the direct joining using hydrogen bond, the joining using an aqueous HF solution, the Au-Si eutectic joining, the void-free joining, the diffusion joining, etc.

The classification apparatus according to the present embodiment can be formed by laminating pattern elements (film pattern elements). The thickness of the pattern elements preferably ranges from 5 to 50 $\mu$m and more preferably from 10 to 30 $\mu$m. The classification apparatus according to the embodiment may be a classification apparatus that is formed by laminating pattern elements carrying definite two-dimensional patterns formed thereon. It is preferable that the pattern elements are laminated in such a manner as the faces thereof being in direct contact. More specifically, reference can be made to the production method that is disclosed in JP-A-2006-187684.

In the classification apparatus shown in Fig. 1, the channels have a rectangular cross-section. The width of the dispersion liquid inlet channel 2 is 500 $\mu$m, the width of the classification channel 3 is 1,000 $\mu$m and the width of the discharge channel 4 is 500 $\mu$m. Each of these channels has a depth (the depth direction perpendicular to the page) of 500 $\mu$m.

The length of the dispersion liquid inlet channel 2 is 20 mm, the length of the classification channel 3 is 50 mm and the length of the discharge channel 4 is 10 mm.

In the first exemplary embodiment, particles of a desired particle diameter can be classified by appropriately selecting the specific gravity and diameter of the particles contained in the dispersion liquid, the specific gravity of the dispersion medium, the sending velocity of the dispersion liquid, etc. Although the classification ability is improved with an increase in the length of the classification channel, a longer channel brings about an increase in the capacity required for the classification apparatus. Therefore, it is preferable to select an appropriate channel length depending on the purpose.

(Second exemplary embodiment)

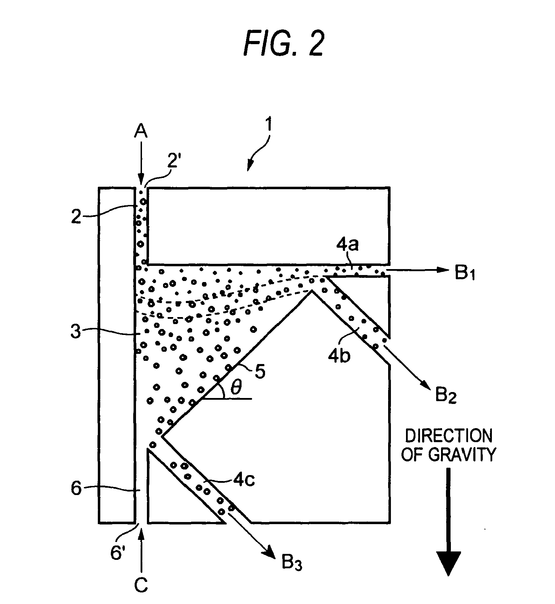

Next, the second exemplary embodiment of the present embodiment will be illustrated by referring to Fig. 2.

Fig. 2 is a schematic sectional view showing the second exemplary embodiment of a classification apparatus that is appropriately usable in the present embodiment. In a classification apparatus 1 shown in Fig. 2, a plate-like microchannel having a depth of 500 $\mu$m is formed in the depth direction perpendicular to the page. The arrow in Fig. 2 indicates the direction of gravity.

In Fig. 2, the classification apparatus 1 comprises a dispersion liquid inlet channel 2 for introducing a solution containing particles (dispersion liquid) A, a classification channel 3 that is continuing the dispersion liquid inlet channel 2 and inclined at an angle θ to the direction of gravity, and discharge channels 4a, 4b and 4c for discharging the classified particles that are continuing the classification channel 3. In the second exemplary emodiment, the classification apparatus 1 also has a transportation liquid inlet channel 6.

In the second exemplary embodiment, the dispersion liquid A is fed from the dispersion liquid inlet 2' that is formed in the upper part of the classification apparatus 1 and sent in the direction of gravity.

In the second exemplary embodiment, the classification channel 3 is provided in such a manner that the cross-section area thereof increases along the traveling direction of the dispersion liquid A.

By providing the classification channel in such a manner that the cross-section area thereof increases along the traveling direction of the dispersion liquid, the following advantages can be obtained. Namely, when the dispersion liquid is sent at a low velocity, clogging sometimes arises in the dispersion liquid inlet channel and/or the classification channel. Therefore, it is required to send the dispersion liquid at such a velocity as not causing the clogging. When the dispersion liquid is sent at an excessively high velocity, on the other hand, its veloctiy exceeds the terminal velocity of the particles. As a result, the particles cannot be sufficiently classified.

In the case where the cross-section area thereof increases along the traveling direction of the dispersion liquid, the flow velocity decreases as the liquid is sent toward the downstream. Therefore, the classification can be sufficiently carried out even though the dispersion liquid is sent at a high speed in the upstream. Thus, the classification efficiency can be improved while avoiding clogging.

In the second exemplary embodiment, the dispersion liquid A is fed from the dispersion liquid inlet 2' that is formed in the upper part of the classification apparatus 1 and sent in the direction of gravity via the dispersion liquid inlet channel 2. On the other hand, the transportation liquid C is fed from the transportation liquid inlet 6' that is formed in the lower part of the classification apparatus 1 and sent in the direction opposite to the direction of gravity via the transportation liquid inlet channel 6. The methods of introducing the dispersion liquid A and the transportation liquid C are not specifically restricted and appropriate methods can be selected from among publicly known ones as in the first exemplary embodiment. Also, the invention is not restricted to the embodiment as shown in Fig. 2 so long as the liquids are fed into the dispersion liquid inlet channel 2 and the transportation liquid inlet channel 6 respectively from the upper and lower parts of the classification apparatus 1.

By sending the dispersion liquid A in the direction of gravity in the dispersion liquid inlet channel 2 formed in the upper part of the classification apparatus 1 as shown in Fig. 2, the dispersion liquid A can be prevented from clogging. By sending the transportation liquid 6 in the direction opposite to gravity in the transportation liquid inlet channel 6 formed in the lower part of the classification apparatus 1, there arises a laminar flow that is send upward from the lower part of the classification channel 3.

The dispersion liquid A sent from the upper part and the transportation liquid C sent from the lower part join together in the classification channel 3 and form an interface, thereby forming a laminar flow.

Next, the classification apparatus 1 of the second exemplary embodiment will be illustrated by presenting as an example a case where the dispersion liquid A contains particles having three kinds (small, medium and large) of diameters (particles a (small), particles b (medium) and particles c (large)).

Concerning the small particles a among the particles contained in the dispersion liquid A in the classification apparatus as shown in Fig. 2, the small particles mostly remain in the dispersion liquid A because of the low sedimentation velocity. Thus, these particles exist in the discharged liquid $B_1$ that is discharged from the discharge channel 4a.

In contrast, the large particles c sediment downward due to gravity. When coming into contact with the bottom face 5 of the classification channel 3 wherein the flow velocity of the liquid is almost zero, these particles quickly sediment downward along the bottom face. They are found in the discharged liquid $B_3$ that is discharged from the discharge channel 4c.

The particles b having a particle diameter intermediate between the small particles a and the large particles c sediment due to gravity. Until coming into contact with the bottom face 5 of the classification channel 3, these particles are sent to the discharge channel 4b. Therefore, they are found in the discharged liquid $B_2$.

Although three discharge channels in total (i.e., 4a, 4b and 4c) are formed in Fig. 2, the present embodiment is not restricted thereto and any number of discharge channels may be provided. Moreover, particles of a desired particle diameter can be classified by optionally altering the position of a discharge channel. Needles to say, the dispersion medium, the transportation liquid, the flow velocity, the channel width, the channel length, etc. may be appropriately changed too.

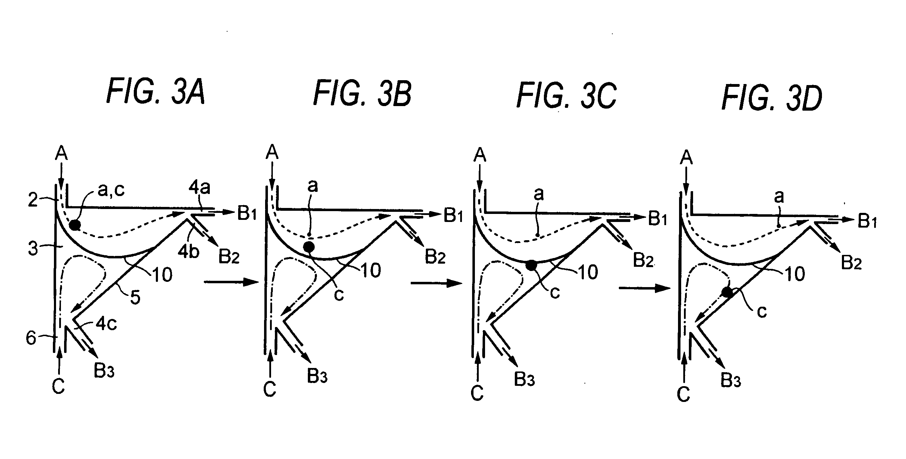

Figs. 3A to 3D are model views showing a case where large and small particles are sent to the classification apparatus of the second exemplary embodiment.

In Figs. 3A to 3D, the dispersion liquid A sent from the upper part of the classification apparatus 1 and the transportation liquid C sent from the lower part thereof join together in the classification channel 3 and form an interface 10 (indicated by a solid line in FigS. 3A to 3D). The dispersion liquid A contains the small particles a and the large particles c.

Because of being largely affected by gravity, the large particles c gradually sediment (Figs. 3B and 3C). When coming into contact with the bottom face 5 of the classification channel 3, they sediment downward along the bottom face 5 (Fig. 3D). Then, the large particles c are discharged as the discharged liquid $B_3$ from the discharge channel 4c provided in the lower part of the classification channel 3.

On the other hand, the small particles a are sent together with the laminar flow of the dispersion liquid A and then discharged as the discharged liquid $B_1$ from the discharge channel 4a provided in the upper part of the classification channel 3.

This classification apparatus of the second exemplary embodiment can be made of the same material as in the classification apparatus of the first exemplary embodiment. Also, it can be produced by the same method as in the classification apparatus of the first exemplary embodiment.

(Third exemplary embodiment)

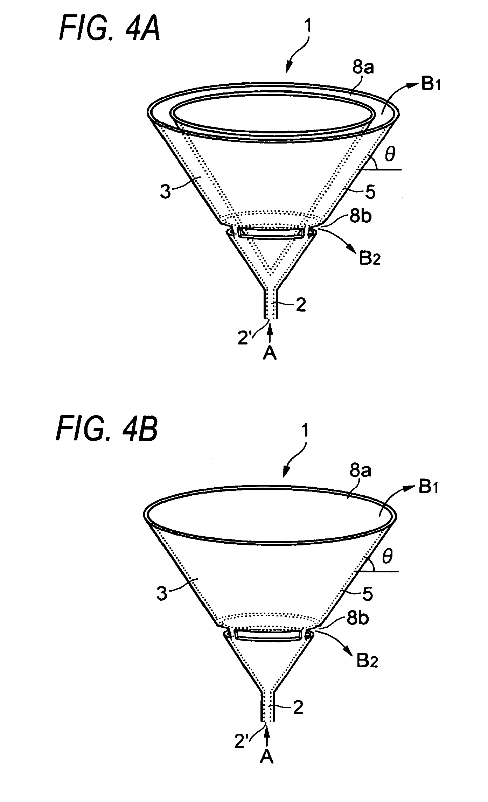

Figs. 4A and 4B is a perspective model view which shows a third exemplary embodiment of a classification apparatus that is appropriately usable in the present embodiment. A classification apparatus 1 shown in Fig. 4A or 4B has a cone shape.

In Figs. 4A and 4B, the classification apparatus 1 comprises a dispersion liquid inlet channel 2 for introducing a solution containing particles (dispersion liquid) A, a classification channel 3 that is continuing the dispersion liquid inlet channel 2 and inclined at an angle θ to the direction of gravity, and discharge channels (not shown in the figure) for discharging the classified particles that are continuing the classification channel 3. In Figs. 4A and 4B, through holes 8a and 8b that are formed in the classification channel 3 and continue the discharge channels are merely showed.

In the third exemplary embodiment, the dispersion liquid inlet 2' is formed in the lower part of the classification apparatus 1 and the dispersion liquid A is fed into the dispersion liquid inlet channel 2 in the direction opposite to the direction of gravity (vertical direction). The method of introducing the dispersion liquid A is not specifically restricted and an appropriate method can be selected as in the first exemplary embodiment.

Although the dispersion liquid A is sent in the opposite direction to the direction of gravity in Figs. 4A and 4B, the invention is not restricted thereto so long as the dispersion liquid inlet channel 2 is formed in the lower part of the classification apparatus 1. That is, the dispersion liquid inlet channel 2 may be provided horizontally to the lower part of the classification channel 3 so long as the dispersion liquid A is sent in the lower part of the classification channel 3.

In the third exemplary embodiment, the classification channel 3 is provided in such a manner that the cross-section (cross-section area) thereof increases along the traveling direction of the dispersion liquid A. As the cross-section (cross-section area) of the classification channel 3 increases along the traveling direction of the dispersion liquid A, the classification efficiency can be improved while avoiding clogging, as discussed above.

As Fig. 4A shows, the classification channel 3 may have a constant channel thickness. As Fig. 4B shows, alternatively, the classification channel 3 may have a cone shape. The classification channel 3 as shown in Fig. 4B shows a larger increase in the cross-section area in the traveling direction of the dispersion liquid A.

In the third exemplary embodiment, the small particles among the particles contained in the dispersion liquid A have a terminal velocity lower than the sending velocity (rising velocity) of the dispersion liquid A. Thus, the small particles are discharged from the through hole 8a formed above the classification channel 3 into the discharge channel (not shown in the figure).

On the other hand, the large particles among the particles contained in the dispersion liquid A sediment due to gravity since the sending velocity (rising velocity) of the dispersion liquid A is lower than the terminal velocity of the larger particles. When coming into contact with the bottom face 5 of the classification channel 3, these large particles sediment along the wall face and discharged from the through hole 8b formed below the classification channel 3 into the discharge channel (not shown in the figure).

In fabricating the classification apparatus according to the third exemplary embodiment, a joining technique can be used. Usual joining techniques are roughly classified into the solid-phase joining and the liquid-phase joining. Typical examples of the joining methods commonly used include the solid-phase joining such as the pressure joining and the diffusion joining and the liquid-phase joining such as the welding, eutectic bonding, the soldering, the adhesion, etc.

In the joining, it is desirable to employ a highly accurate joining method by which the dimension accuracy can be kept without the destruction of the microstructure of the channel, etc., caused by deterioration or large deformation of a material due to high-temperature heating. Examples of such a technique include the silicon direct joining, the anodic joining, the surface activation joining, the direct joining using hydrogen bond, the joining using an aqueous HF solution, the Au-Si eutectic joining, the void-free joining, the diffusion joining, etc.

Since the classification apparatus according to the present embodiment has channels in a three-dimensional shape, it is preferably formed by laminating pattern elements (film pattern elements). The thickness of the pattern elements preferably ranges from 5 to 50 $\mu$m and more preferably from 10 to 30 $\mu$m.

The classification apparatus according to the embodiment is preferably a classification apparatus that is formed by laminating pattern elements carrying definite two-dimensional patterns formed thereon. It is preferable that the pattern elements are laminated in such a manner as the faces thereof being in direct contact.

It is preferable that a plurality of pattern elements corresponding to the horizontal cross-section shapes of the classification apparatus are laminated to form the classification apparatus, since the classification apparatus can be conveniently fabricated thereby.

As a preferable example of the method of producing the classification apparatus according to the present embodiment, there can be cited a method of producing a classification apparatus which comprises: (i) the step of forming a plurality of pattern elements corresponding to the horizontal cross-section shapes of the target classification apparatus on a first substrate (the donor substrate-forming step); and (ii) the step of repeatedly joining and separating the first substrate having a plurality of pattern elements formed thereon as described above and a second substrate to transfer the plurality of pattern elements on the first substrate onto the second substrate (the joining step). More specifically, reference can be made to the production method that is disclosed in JP-A-2006-187684.

Next, the method of producing the classification apparatus according to the present embodiment will be described in greater detail.

[Donor substrate-forming step]

In this embodiment, it is preferable to fabricate the donor substrate by using the electrocasting method. The donor substrate means a substrate wherein a plurality of pattern elements corresponding to the horizontal cross-section shapes of the target classification apparatus are formed on a first substrate. It is preferable that the first substrate is made of a metal, ceramics or silicon and a metal such as stainless steel is appropriately usable therefor.

After preparing the first substrate, a thick photo resist is applied on the first substrate. Next, it is exposed via photo masks corresponding to the respective horizontal cross-section shapes of the target classification apparatus and the photo resist is developed. Thus, positive/negative reversal resist patterns of the respective horizontal cross-section shapes are formed. Then, the substrate having these resist patterns is dipped in a plating bath and, for example, nickel plating is developed in the photo resist-uncoated areas of the surface of the metal substrate. It is preferable that the pattern elements are made of copper or nickel with the use of the electrocasting method.

After removing the resist patterns, the pattern elements corresponding to the respective horizontal cross-section shapes of the classification apparatus are formed on the first substrate.

[Joining step]

The joining step means a step wherein the first substrate (donor substrate) having the plurality of pattern elements formed thereon and a second substrate (target substrate) are repeatedly joined and separated to thereby transfer the pattern elements from the donor substrate to the target substrate. It is preferable that joining is carried out by the joining at ordinary temperature or the surface activation joining.

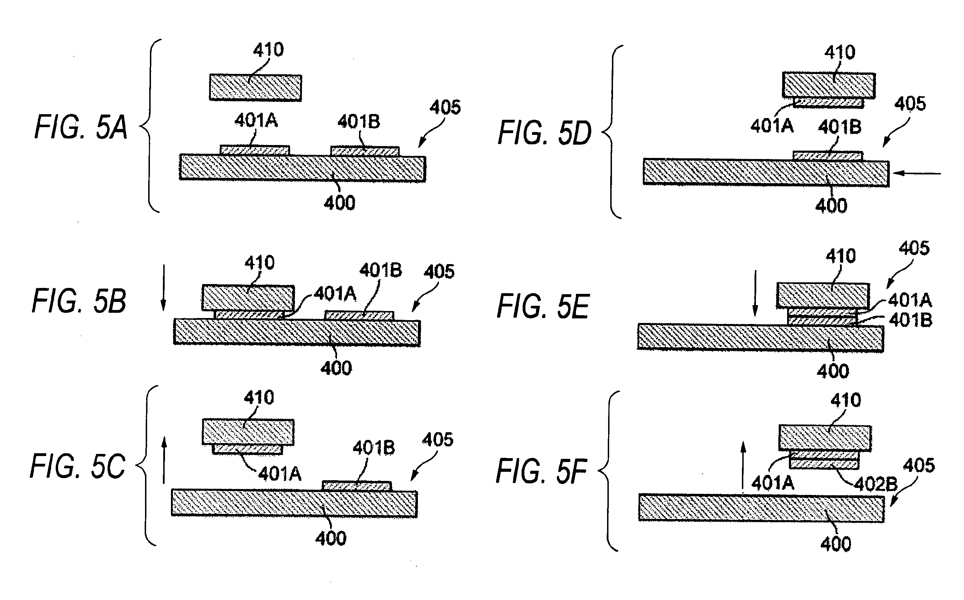

Figs. 5A to 5F are a flow chart showing an example of the method of producing a classification apparatus that is appropriately usable in the third exemplary embodiment.

As Fig. 5A shows, a plurality of pattern elements (401A and 401B) corresponding to the respective cross-section shapes of the target classification apparatus are formed on a metal substrate 400 serving as a first substrate of a donor substrate 405. This donor substrate 405 is located on a lower stage (not shown in the figure) in a vacuum tank, while a target substrate 410 is located on an upper stage (not shown in the figure) in the vacuum tank. Next, the vacuum tank is evacuated to achieve high- or ultrahigh-vacuum conditions. Then the lower stage is relatively moved to the upper stage and a pattern element 401A that is the first layer of the donor substrate 405 is positioned immediately below the target substrate 410. Subsequently, the surface of the target substrate 410 and the surface of the pattern element 401A (i.e., the first layer) are cleaned by irradiating with an argon atom beam.

As Fig. 5B shows, the upper stage is moved downward and the target substrate 410 and the donor substrate 405 are pressed by applying a definite load (for example, 10 kgf/cm$^2$) to thereby join the target substrate 410 and the pattern element 401A (i.e., the first layer) at ordinary temperature (the surface activation joining). In this embodiment, pattern elements 401A, 401B and so on are laminated in this order.

As Fig. 5C shows, the upper stage is then moved upward and thus the donor substrate is separated from the target substrate. Thus, the pattern element 401A (i.e., the first layer) is peeled off from the metal substrate (the first substrate) 400 and transferred onto the target substrate 410 side. This is because the adhesion force between the pattern element 401A and the donor substrate 405 is larger than the adhesion force between the pattern element 401A and the metal substrate (the first substrate) 400.

As Fig. 5D shows, the lower stage is moved so that a pattern element 401B (i.e., the second layer) on the donor substrate 405 is positioned immediately below the target substrate 410. Then, the surface of the pattern element 401A (i.e., the first layer) having been transferred onto the target substrate 410 side (the face being in contact with the metal substrate 400) and the surface of the pattern element 401B (i.e., the second layer) are cleaned in the above-described manner.

As Fig. 5E shows, the upper stage is moved downward and thus the pattern element 401A (i.e., the first layer) and the pattern element 401B (i.e., the second layer) are joined together. When the upper stage is moved upward as shown in Fig. 5F, the pattern element 401B (i.e., the second layer) is separated from the metal substrate (the first substrate) 400 and transferred onto the target substrate 410 side.

Other pattern elements are also repeatedly subjected to the positioning between the donor substrate 405 and the target substrate 410, joining and separation in the same manner. Thus, a plurality of pattern elements is transferred onto the target substrate. Then, the laminate having been transferred onto the target substrate 410 is taken out from the upper stage and the target substrate 410 is removed. Thus, a classification apparatus can be obtained.

Although the donor substrate is fabricated by using the electrocasting method in the above embodiment, use can be made of a semiconductor process therefor. For example, a donor substrate can be fabricated by preparing a substrate comprising an Si wafer, forming a polyimide releasing layer on this substrate by the spin coating method, forming an Al film that is a component of a classification apparatus on the surface of the releasing layer by the sputtering method, and then patterning the Al film by the photolithography.

[Example]

Next, the present embodiment will be illustrated in greater detail by referring to Example. However, it is to be understood that the present embodiment is not restricted to the following Example.

In this Example, classification was carried out by using the classification apparatus 1 shown in Fig. 2.

In Fig. 2, the microchannels (dispersion liquid inlet channel, transportation liquid inlet channel, classification channel and discharge channels) are all in a plate-shape having a depth of 0.5 mm.

The dispersion liquid inlet channel 2, the transportation liquid inlet channel 6 and the discharge channels 4 (4a, 4b and 4c) have all a width of 0.5 mm. It is also preferable that the joint part of the classification channel 3 to the discharge channel 4a is rounded to avoid clogging. To introduce the dispersion liquid A and the transportation liquid C, a microsyringe was employed.

The classification channel 3 is in an isosceles triangle shape having a side length of 50 mm.

In Fig. 2, the arrow indicates the direction of gravity.

As the dispersion liquid A, a 10 wt% aqueous dispersion of spherical particles of polymethyl methacrylate (PMMA) (TECHNOPOLYMER manufactured by SEKISUI PLASTICS Co.) was employed. As the transportation liquid C, purified water was employed.

The dispersion liquid A and the transportation liquid C were fed both at 10 ml/h.

The particles contained in the dispersion liquid A dropped halfway in the classification channel 3. In this step, particles having large diameter, which had a high sedimentation velocity, were discharged as such from the discharge channel 4c or, after coming into contact with the bottom face 5 of the classification channel 3, dropped along the wall face and then discharged from the discharge channel 4c.

On the other hand, particles having small diameter did not collide with the bottom face (inclined face) 5 but were discharged as such from the discharge channel 4a.

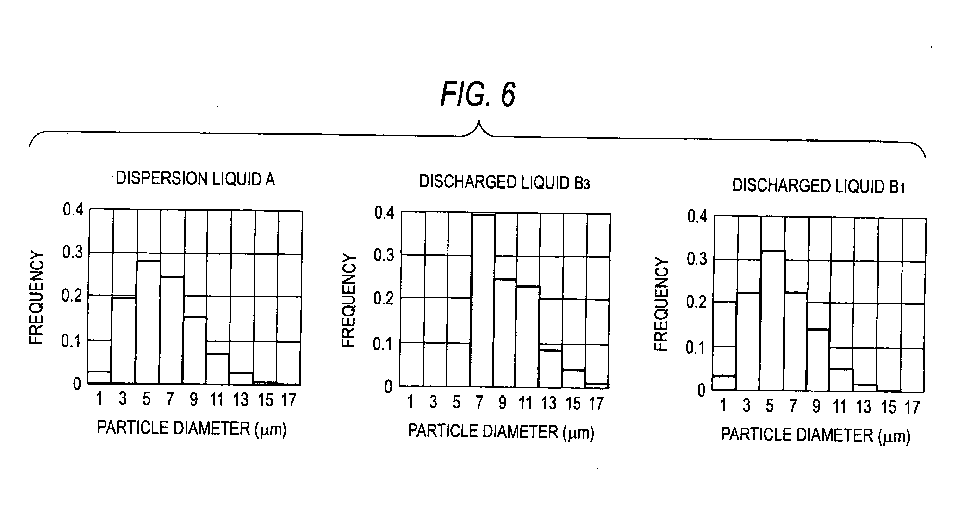

Fig. 6 shows particle size distributions of the dispersion liquid A and the dispersions (B$_1$ and B$_3$) discharged from the discharge channels 4a and 4c. In the bar graphs in Fig. 6, a 5 $\mu$m bar, for example, shows the frequency of particles being larger than 3 $\mu$m but not larger than 5 $\mu$m.

Thus, no particle with a diameter exceeding 15 $\mu$m was detected in the dispersion B$_1$ having been classified, which proved that classification of micrometer-size particles had been completed.

After performing the treatment continuously for 8 hours, the classification efficiency was not lowered and no particle with a diameter exceeding 15 μm was detected in the dispersion $B_1$. After performing the treatment continuously for additional 8 hours, no clogging arose in the channels.

The foregoing description of the exemplary embodiments of the present invention has been provided for the purpose of illustration and description. It is not intended to be exhaustive or to limit the invention to the precise forms disclosed. Obviously, many modifications and variations will be apparent to practitioners skilled in the art. The exemplary embodiments are chosen and described in order to best explain the principles of the invention and its practical applications, thereby enabling others skilled in the art to understand the invention for various exemplary embodiments and with the various modifications as are suited to the particular use contemplated. It is intended that the scope of the invention be defined by the following claims and their equivalents.

**Claims**

1.  A classification apparatus, comprising:

    a dispersion liquid inlet channel that introduces a dispersion liquid containing particles;
    a classification channel that classifies the particles; and
    at least one discharge channel that discharges the classified particles,
    wherein the classification channel is provided inclinedly to a direction of gravity.

2.  The classification apparatus according to claim 1,
    wherein the at least one discharge channel includes a discharge channel provided in an upper part of the classification channel.

3.  The classification apparatus according to claim 1 or 2,
    wherein the at least one discharge channel includes a discharge channel provided in a lower part of the classification channel.

4.  The classification apparatus according to any one of claims 1 to 3,
    wherein an inclined angle of the classification channel is larger than 0° but not larger than 75°.

5.  The classification apparatus according to any one of claims 1 to 4,
    wherein the classification channel is provided in such a manner that a cross-section area of the classification channel increases along a traveling direction of the dispersion liquid.

6.  The classification apparatus according to any one of claims 1 to 5,
    wherein the classification channel has a cone shape.

7.  The classification apparatus according to any one of claims 1 to 6, further comprising:

    a transportation liquid inlet channel that introduces a transportation liquid which transports the dispersion liquid.

8.  The classification apparatus according to any one of claims 1 to 7, further comprising:

    a unit that applies an electric field or a magnetic field to the classification channel.

9.  A classification method, comprising:

    introducing a dispersion liquid containing particles into a dispersion liquid inlet channel;
    classifying the dispersion liquid by passing through a classification channel that is provided inclinedly to a direction of gravity; and
    discharging the classified particles from at least one discharge channel.

10. The classification method according to claim 9, further comprising:

    introducing a transportation liquid into a transportation liquid inlet channel, the transportation liquid transporting the dispersion liquid,
    wherein the transportation liquid is transported in the opposite direction to the direction of gravity.

**11.** The classification method according to claim 9 or 10,
wherein the at least one discharge channel includes a discharge channel provided in an upper part of the classification channel.

**12.** The classification method according to any one of claims 9 to 11,
wherein the at least one discharge channel includes a discharge channel provided in a lower part of the classification channel.

**13.** The classification method according to any one of claims 9 to 12,
wherein an inclined angle of the classification channel is larger than 0° but not larger than 75°.

**14.** The classification method according to any one of claims 9 to 13,
wherein the classification channel is provided in such a manner that a cross-section area of the classification channel increases along a traveling direction of the dispersion liquid.

**15.** The classification method according to any one of claims 9 to 14,
wherein the classification channel has a cone shape.

**16.** The classification method according to any one of claims 9 to 15, further comprising:

applying an electric field or a magnetic field to the classification channel.

# FIG. 1

# FIG. 2

FIG. 3A          FIG. 3B          FIG. 3C          FIG. 3D

FIG. 4A

FIG. 4B

FIG. 5A {

410

401A    401B    405

400

FIG. 5B

410    401B    405
401A

400

FIG. 5C {

410

401A    401B    405

400

FIG. 5D {

410

401A    401B    405

400

FIG. 5E

410    405
401A
401B

400

FIG. 5F {

410    405
401A    402B

400

EP 2 103 354 A2

21

FIG. 6

DISPERSION LIQUID A

DISCHARGED LIQUID B3

DISCHARGED LIQUID B1

EP 2 103 354 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11508182 T
- JP 2006116520 A
- JP 2006187770 A
- JP 2007175684 A
- JP 2006187684 A

### Non-patent literature cited in the description

- **Junichi YOSHIDA.** Maikuroriakuta-Shin'Jidai no Gosei Gijyutu. CMC, 2003
- Bisai Kako Gijutsu: Oyo-hen: Fotonikusu Erekutoron-ikus e no Oyo. NTS, 2003